# EUROPEAN PATENT SPECIFICATION

(11) **EP 2 947 404 B1**
(45) Date of publication and mention of the grant of the patent: **19.08.2020**
(21) Application number: 14169420.8
(22) Date of filing: 22.05.2014
(51) Int. Cl.: F25B 11/00, F25B 27/00

(54) **Air to water heat pump system**
Luft/Wasser-Wärmepumpensystem
Système de pompe à chaleur d'air dans l'eau

(43) Date of publication of application: 25.11.2015
(73) Proprietor: Vaillant GmbH, 42859 Remscheid (DE)
(72) Inventor: Vicente Ortiz de Guinea, Javier, 01010 Vitoria-Gasteiz (Araba) (ES)
(74) Representative: Popp, Carsten

(56) References cited:
- JP-A- 2004 020 143
- JP-A- 2011 038 489
- US-A- 2 652 699
- US-A1- 2010 326 101

## Description

### FIELD OF THE INVENTION

The present invention relates to a heat pump system, and more particularly to a air-to-water heat pump system employing a wind turbine for creating air flow.

### BACKGROUND OF THE INVENTION

A basic air-to-water heat pump system typically has a compressor, a condenser, an expansion device, and an evaporator. These components are generally serially connected via conduit or piping and are well known in the art. During operation of the system, the compressor acts on relatively cool gaseous refrigerant to raise the temperature and pressure of the refrigerant. From the compressor, the high temperature, high pressure gaseous refrigerant flows into the condenser where it is cooled and exits the condenser as a high pressure liquid refrigerant. The high pressure liquid refrigerant then flows to an expansion device, which controls the amount of refrigerant entering into the evaporator. The expansion device lowers the pressure of the liquid refrigerant before allowing the refrigerant to flow into the evaporator. In the evaporator, the low pressure, low temperature refrigerant absorbs heat from air blown by a fan over the evaporator's coils and exits the evaporator as a saturated vapor having essentially the same pressure as when it entered the evaporator. The suction of the compressor then draws the gaseous refrigerant back to the compressor where the cycle begins again.

Currently, the fan for creating air flow is fully powered by electricity, which obviously consumes a lot of energy sources and increases the operation cost of the system accordingly.

American patent US 2,652,699 and published application US 2010/0326101 A1 each discloses a wind turbine that is combined with a heat pump and able to actuate the fan for evaporation as the wind turbine is driven by wind forces. Document US 2 652 699 A discloses an air-to-water heat pump system having the features according to the preamble of claim 1. Nevertheless, when there is a small wind and the wind turbine has to rotate at a slow speed, the fan could not create enough air flow for evaporation, thus full heat demands could not be fulfilled.

### SUMMARY OF THE INVENTION

It is an object of present invention to provide an air-to-water heat pump system which can take advantage of wind energy sources, thereby reducing consumption of electricity and decreasing operation cost.

It is another object of present invention to provide an air-to-water heat pump system that is able to ensure full heat demands at all time.

According to the present invention the above objective is solved by the features of claim 1. According to one aspect of the present invention there is provided an air-to-water heat pump system comprising a heating pump, a wind turbine, and an impeller. The heat pump includes a compressor, a condenser, an expansion device, and an evaporator. The wind turbine is able to rotate on a rotational axis by the action of the wind. The impeller is operable to rotate on the same axis as the rotational axis of the wind turbine to create an air flow passing through the evaporator. The wind turbine together with the impeller creates air flow going through the evaporator for air-to-refrigerant heat exchanging, which can reduce consumption of electricity by using the energy of the wind. The system further includes a motor/generator having a shaft where the impeller is rotatably mounted. The impeller is associated with the wind turbine in such a way that, the impeller can selectively rotate independently or together with the wind turbine. When the impeller rotates independently with the wind turbine, the motor/generator performs as a motor to drive the impeller, and when the impeller rotates together with the wind turbine, the motor/generator performs as a generator to generate electricity. In this way, the motor/generator can act as a motor for driving the impeller when the wind power is not enough for heating demands, for example, in the case that the rotational speed of the wind turbine is smaller than a lower threshold. The motor/generator can also act as a generator for generating electricity when the wind power exceeds the heating demands, for example, in the case that the rotational speed of the wind turbine is larger than the lower threshold.

In one embodiment, the rotational axis of the wind turbine extends in a vertical direction to facilitate creation of an air flow therethrough. This kind of wind turbine can be a Savonius type or a Darrieus type.

In another embodiment, the wind turbine creates a housing defining a passageway therein, and the impeller is disposed inside of the housing of the wind turbine to make the system compact and small size.

In a further embodiment, the heat pump includes a DC motor for actuating the compressor and a DC pump for circulating a flow of water through the condenser to contact with a refrigerant flow in a heat exchange relationship. The generated electricity can be supplied to the DC motor and the DC pump

Preferably, when the rotational speed of the wind turbine exceeds an upper threshold which is larger than the lower threshold, which means there is a very strong wind, the excess of generated electricity can be further output to power grids.

Preferably, the air-to-water heat pump system further includes a common DC bus connected among the motor/generator, the DC motor, and the DC pump for supplying the electricity generated by the motor/generator to the DC motor and the DC pump.

In another embodiment, the air-to-water heat pump system includes a cover covering the heat pump and the wind turbine to prevent the heat pump and the wind turbine from being touched, meanwhile to allow the wind to pass therethrough.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 is a perspective view of an air-to-water heat pump system in accordance with one embodiment of present invention, which schematically shows main components of the system;
Fig. 2a is an exploded view of the heat pump system as shown in Fig. 1, wherein a cover is removed and a motor/generator is added to selectively activate a fan or generate electricity; and Fig. 2b is an exploded view of the cover of the heat pump system as shown in Fig. 1
Fig. 3 is a schematic diagram illustrates the heat pump system as shown in Fig. 1 in connection to power grids;
Fig. 4 is a flow chart showing operation of the heat pump system as shown in Fig. 1.

### DETAILED DESCRIPTION OF THE PREFERRED EMBODIMENTS

Reference will now be made to the drawing figures to describe the preferred embodiments of the present invention in detail. However, the embodiments can not be used to restrict the present invention. Changes such as structure, method and function obviously made to those of ordinary skill in the art are also protected by the present invention.

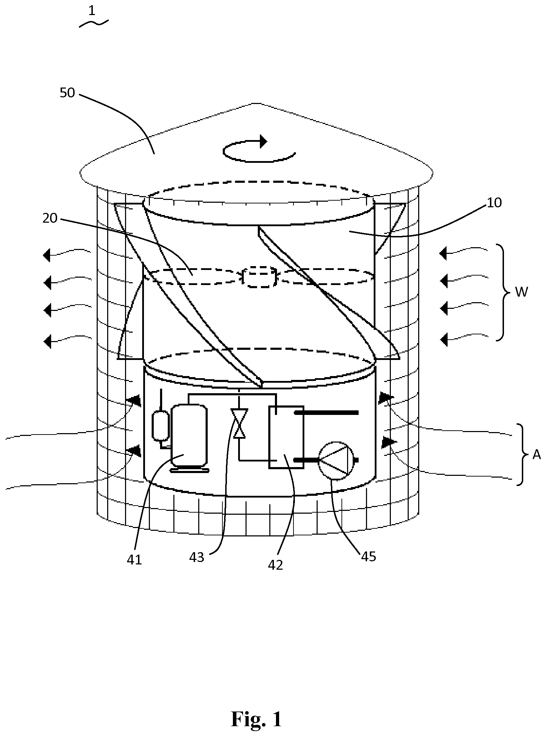

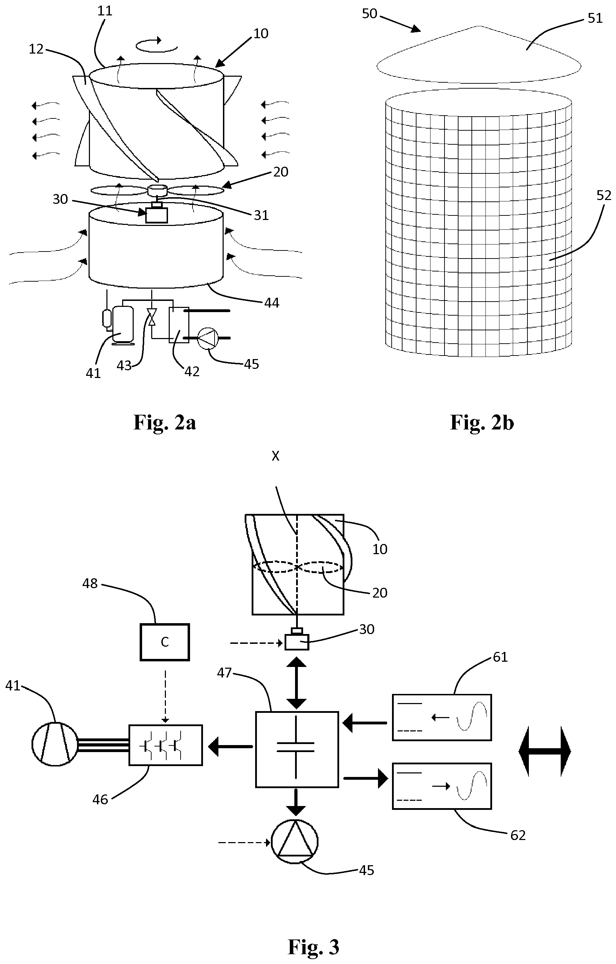

Referring to Figs. 1, 2a and 2b, an air-to-water heat pump system 1 includes a heat pump, a wind turbine 10, an impeller 20, a motor/generator 30, and a cover 50. The heat pump typically includes a compressor 41, a condenser 42, an expansion device 43, and an evaporator 44.

The compressor 41 uses electrical power to compress the refrigerant form a low pressure gaseous state to a high pressure gaseous state thereby increasing the temperature, enthalpy and pressure of the refrigerant. In that process, the temperature of the gaseous is increased up to a value that makes possible the heat exchange in the condenser 42. There are different types of compressor depending on the technology of the compression and depending on the technology of the motor, such as fixed speed AC motor, modulating AC motor, brushless DC motor, etc. In this embodiment, the compressor motor can be a DC motor, preferably, a Permanent Magnet Brushless DC motor (PMBL). The main characteristics of this kind motor are that the rotor includes a permanent magnet while the stator has the fixed windings configured like a three phase motor. The motor requires an electronic inverter driver 46 (shown in Fig. 3) that uses the available energy in a DC voltage storage or DC bus (a bank of DC capacitors) to create a switching sequence in the windings that simulate the operation of the brushes in a traditional DC motor.

The condenser 42 takes the form of a heat exchanger well known in the state of art. The gaseous refrigerant leaves from the compressor 41 and then flows through the condenser 42 for being condensed at a substantially constant pressure to a saturated liquid state. As a result, the heat transfers from the refrigerant flowing at a first side of the condenser 42 to a flow of cooling water created by a DC pump 45 (shown in Fig. 3) at a secondary side of the condenser 42. Wherein, the DC pump 45 can include a PMBL motor, a small inverter, and additional electronic components for control.

The expansion device 43 is used to control the amount of refrigerant entering into the evaporator 44. The liquid refrigerant from the condenser 42 flows through the expansion device 42, result in the pressure of the liquid is decreased. In the process, the refrigerant evaporates partially causing the refrigerant to change to a mixed liquid-gaseous state, reducing its temperature down to a value that makes possible heat exchanges in the evaporator. There are different types of expansion device depending on the level of control provided (fixed devices, thermostatic devices and electronically controlled).

The evaporator 44 is an air to refrigerant heat exchanger where the heat energy available in the air flows through it and transfers to the refrigerant fluid that evaporates inside from liquid to gas. The evaporator can take a circular form which is common in rooftop heat pumps with vertical axial fan. In other embodiments, the evaporator can take a flat or horizontal form as well.

A typical wind turbine is a device that converts kinetic energy from the wind into electric power, which includes vertical and horizontal axis types. In this embodiment, the wind turbine 10 is a vertical axis type, for example, a Savonius type wind turbine. The wind turbine 10 includes a housing 11 and a number of curved blades 12. The housing 11 can take the form of a barrel, and the curved blades 12 are formed on outer circumferential surface of the barrel. When wind force (as indicated by arrows W in Fig. 1) is applied on the curved blades 12, the housing 11 is able to rotate on a rotational axis (as indicated by broken line X in Fig. 3) extending in a vertical direction. The wind turbine can also be a Darrieus type, and in such embodiment, the housing may not be necessary.

The housing 11 defines a passageway therein, and the impeller 20 is operable to rotate on the same axis as the rotational axis X of the housing 11. In this way, when the impeller 20 rotates, an air flow (as indicated by arrows A in Fig. 1) can be created through the passageway of the housing 11 and the evaporator 44, thereby causing a heat exchange from air to refrigerant in the evaporator 44. In this embodiment, the impeller 20 is disposed inside of the housing 11 to make the whole system compact and small size. It is obvious for the skilled person in the art that, in an alternative embodiment, the impeller 20 can also be disposed outside the housing 11 with the same axis as the rotational axis X. The impeller 20 is associated with the wind turbine 10 in such a way that, the impeller 20 is operable to rotate independently when the speed of the wind turbine 10 is relatively low, and to rotate together with the wind turbine 10 when the speed of the wind turbine 10 is high enough, which can be achieved pure mechanically or electronically controller.

A typical motor/generator can perform motor control to provide motive power and also control regeneration by the motor for acting as a generator. According to the invention, the motor/generator 30 has a shaft 31 where the impeller 20 is rotatably mounted, in other words, the shaft is in line with the rotational axis X of the impeller 20 and the housing 10.

The cover 50 is used for covering the heat pump and the wind turbine 10 to avoid these components being touched. The cover 50 includes a circled shield 52 surrounding the wind turbine 10 and the heat pump, and a protecting hood 51 disposed on the circled shield 52. In order to ensure enough wind can be supplied to the wind turbine 10, the cover 50 is configured to allow winds to pass therethrough, for example, the circled shield 52 may employ a grid surface.

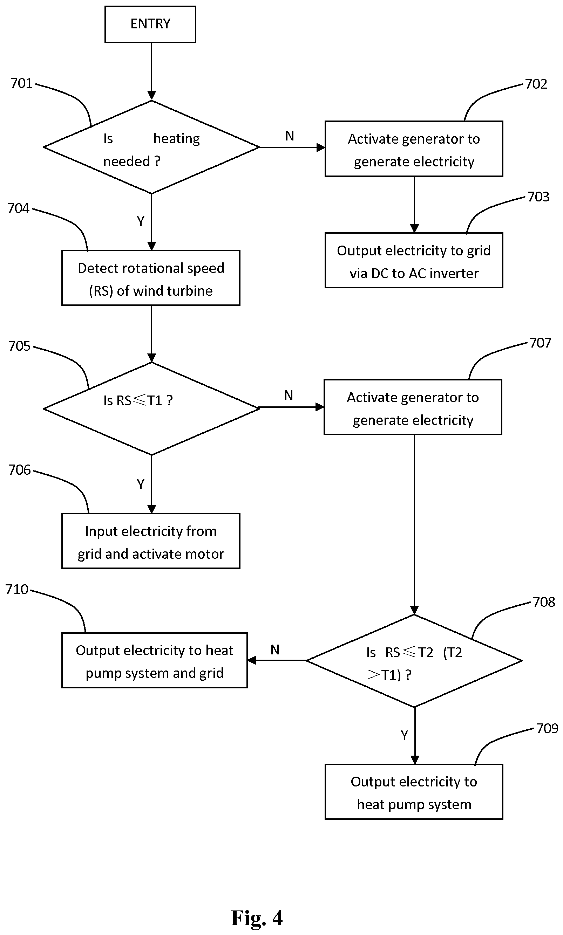

Referring to Fig. 3, in conjunction with Fig. 4, the air-to-water heat pump system 1 is connected to power grids via a AC to DC rectifier 61 and a DC to AC inverter 62. The heat pump system 1 also includes a controller 48 which governs the operation of the system. The controller 48 may incorporate a Micro Controller Unit (MCU), or other types of integrated circuits.

In this embodiment, the heat pump system 1 is used for heating purpose, like supplying hot sanitary water, or heating building interiors. In other embodiments which include components in the refrigerant circuit for inversion of the refrigerant cycle, the heat pump system can also cool building interiors. As shown in Fig. 4, the controller 48 first judges if there is heating needed (step 701). When there is no heating needed, the controller 48 controls the impeller 20 to rotate together with the wind turbine 10, at this time, the motor/generator 30 functions as a generator, and wind energy received by the impeller 20 is directly converted to electricity (step 702), and the generated electricity is further output to power grids via the DC bus 47 and the DC to AC inverter (step 703).

If there is a heating needed, the controller 48 will detect rotational speed RS of the wind turbine 10 (step 704), and further judge if the speed RS is smaller than or equals to a lower threshold T1 (step 705). If the speed RS is smaller than the lower threshold T1, which means the wind power is not enough for heating demands, then the controller 48 has electricity input from the power grids via the AC to DC rectifier 61 and the DC bus 47, and further activate the impeller 20 via the motor/generator 30 (step 706). At this time, the motor/generator 30 performs as a motor, and the impeller 20 is activated for supplementing insufficiency of wind power at the time being, thereby ensuring enough air flow to pass through the evaporator 44 to reach heating demands.

If the speed RS is larger than the lower threshold T1, which means the wind power is more than heating demands, then the controller 48 operates the motor/generator 30 to act as a generator (step 707). The controller 48 further judges if the speed RS is smaller than or equals to an upper threshold T2 which is larger than T1 (step 708). If the speed RS is smaller than the upper threshold T2, which means the excess of wind power is not enough for operation of all electrical components of the heat pump system and electricity from power grids may still be needed, at this time, the excess wind energy will only be supplied to the electrical components of the heat pump system, such as output of electricity to the compressor 41 via the DC bus 47 and the electronic inverter driver 46, or output of electricity to the DC pump 45 via the DC bus 47. If the speed RS is larger than the upper threshold T2, which means the excess of wind power is enough for operation of all electrical components of the heat pump system and there is additional energy capable of being output to power grids. Therefore, the controller 48 controls electricity to output to electrical components of the heat pump system, like compressor 41 and DC pump 45, and further output additional electricity to power grids via the DC to AC inverter 62 (step 710). The thresholds T1 and T2 are defined by the controler 48, and can be constant or be calculated according to the operation conditions of the heat pump system. The operation conditions can be represented by a set of operational parameters, for example, condensing temperature, evaporating temperature, and compressor speed, and the thresholds can be calculated with a formula based on these values. In an alternative embodiment, the set of operational parameters also can be condensing pressure, condensing temperature, and compressor speed; or air inlet temperature, water flow temperature, and compressor speed.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. An air-to-water heat pump system comprising:
a heat pump comprising a compressor (41), a condenser (42), an expansion device (43), and an evaporator (44);
a wind turbine (10) being able to rotate on a rotational axis (X) by the action of the wind;
an impeller (20) being operable to rotate on the same axis as the rotational axis of the wind turbine to create an air flow passing through the evaporator; **characterized in that**
the system further comprises a motor/generator (30) having a shaft where the impeller is rotatably mounted; and the impeller is associated with the wind turbine in such a way that, the impeller can selectively rotate independently or together with the wind turbine; when the impeller rotates independently with the wind turbine, the motor/generator performs as a motor to drive the impeller, and when the impeller rotates together with the wind turbine, the motor/generator performs as a generator to generate electricity.

2. An air-to-water heat pump system according to claim 1, wherein said rotational axis extends in a vertical direction.

3. An air-to-water heat pump system according to claim 1, wherein said turbine has a housing (11) defining a passageway therein, and said impeller (20) is disposed inside of the housing.

4. An air-to-water heat pump system according to claim 1, wherein said motor/generator is operable to perform as a motor for driving the impeller when the rotational speed of the wind turbine is smaller than a lower threshold, and to perform as a generator for generating electricity when the rotational speed of the wind turbine exceeds said lower threshold.

5. An air-to-water heat pump system according to claim 4, wherein said heat pump further comprises a DC motor for actuating the compressor and a DC pump (45) for circulating a flow of water through the condenser to contact with a refrigerant flow in a heat exchange relationship.

6. An air-to-water heat pump system according to claim 5, wherein when the rotational speed of the wind turbine exceeds said lower threshold, the generated electricity is supplied to the DC motor and the DC pump.

7. An air-to-water heat pump system according to claim 6, wherein when the rotational speed of the wind turbine exceeds an upper threshold which is larger than the lower threshold, the generated electricity is further output to power grids.

8. An air-to-water heat pump system according to claim 5, further comprising a common DC bus (47) connected among the motor/generator, the DC motor, and the DC pump for supplying the electricity generated by the motor/generator to the DC motor and the DC pump.

9. An air-to-water heat pump system according to claim 4, further comprising a cover (50) covering the heat pump and the wind turbine to prevent the heat pump and the wind turbine from being touched, meanwhile to allow the wind to pass therethrough.

10. An air-to-water heat pump system according to claim 7, wherein the lower and the upper thresholds are constant or can be calculated according to operational parameters of the heat pump system.

## Patentansprüche

1. Luft/Wasser-Wärmepumpensystem, umfassend:
eine Wärmepumpe, die einen Kompressor (41), einen Kondensator (42), eine Expansionsvorrichtung (43) und einen Verdampfer (44) umfasst;
eine Windturbine (10), die fähig ist, durch die Wirkung des Windes um eine Drehachse (X) zu drehen;
ein Flügelrad (20), das betriebsfähig ist, um auf der gleichen Achse wie die Drehachse der Windturbine zu drehen, um einen Luftstrom zu erzeugen, der durch den Verdampfer durchgeht; **dadurch gekennzeichnet, dass**
das System weiter einen Motor/Generator (30) umfasst, der eine Welle aufweist, an der das Flügelrad drehbar montiert ist; und wobei das Flügelrad der Windturbine so zugeordnet ist, dass das Flügelrad wahlweise unabhängig oder gemeinsam mit der Windturbine drehen kann; wobei, wenn das Flügelrad unabhängig von der Windturbine dreht, der Motor/Generator wie ein Motor wirkt, um das Flügelrad anzutreiben, und wenn das Flügelrad gemeinsam mit der Windturbine dreht, der Motor/Generator wie ein Generator wirkt, um Elektrizität zu erzeugen.

2. Luft/Wasser-Wärmepumpensystem nach Anspruch 1, wobei sich die Drehachse in eine vertikale Richtung erstreckt.

3. Luft/Wasser-Wärmepumpensystem nach Anspruch 1, wobei die Turbine ein Gehäuse (11) aufweist, das darin einen Durchlass definiert, und das Flügelrad (20) innerhalb des Gehäuses angeordnet ist.

4. Luft/Wasser-Wärmepumpensystem nach Anspruch 1, wobei der Motor/Generator betriebsfähig ist, um als Motor zum Antreiben des Flügelrads zu wirken, wenn die Drehgeschwindigkeit der Windturbine kleiner ist als ein unterer Schwellenwert, und um als Generator zum Erzeugen von Elektrizität zu wirken, wenn die Drehgeschwindigkeit der Windturbine den unteren Schwellenwert überschreitet.

5. Luft/Wasser-Wärmepumpensystem nach Anspruch 4, wobei die Wärmepumpe weiter einen Gleichstrommotor umfasst, um den Kompressor zu betätigen, und eine Gleichstrompumpe (45) zum Zirkulieren eines Wasserstroms durch den Kondensator, um mit einem Kühlstrom in einer Beziehung des Wärmeaustauschs in Berührung zu kommen.

6. Luft/Wasser-Wärmepumpensystem nach Anspruch 5, wobei, wenn die Drehgeschwindigkeit der Windturbine den unteren Schwellenwert überschreitet, die erzeugte Elektrizität an den Gleichstrommotor und die Gleichstrompumpe abgegeben wird.

7. Luft/Wasser-Wärmepumpensystem nach Anspruch 6, wobei, wenn die Drehgeschwindigkeit der Windturbine einen oberen Schwellenwert überschreitet, der größer ist als der untere Schwellenwert, die erzeugte Elektrizität weiter in das Stromnetz eingespeist wird.

8. Luft/Wasser-Wärmepumpensystem nach Anspruch 5, weiter umfassend einen gemeinsamen Gleichstrombus (47), der zwischen dem Motor/Generator, dem Gleichstrommotor und der Gleichstrompumpe verbunden ist zum Abgeben der vom Motor/Generator erzeugten Elektrizität an den Gleichstrommotor und die Gleichstrompumpe.

9. Luft/Wasser-Wärmepumpensystem nach Anspruch 4, weiter umfassend eine Abdeckung (50), die die Wärmepumpe und die Windturbine abdeckt, um zu verhindern, dass die Wärmepumpe und die Windturbine berührt werden, während sie es zulässt, das Wind durchströmt.

10. Luft/Wasser-Wärmepumpensystem nach Anspruch 7, wobei der untere und der obere Schwellenwert konstant sind oder gemäß Betriebsparametern des Wärmepumpensystems berechnet werden können.

## Revendications

1. Système de pompe à chaleur air-eau comprenant :
une pompe à chaleur comprenant un compresseur (41), un condensateur (42), un dispositif d'expansion (43), et un évaporateur (44) ;
une turbine éolienne (10) qui est capable de tourner sur un axe de rotation (X) par l'action du vent ;
une aube (20) pouvant servir à tourner sur le même axe que l'axe de rotation de la turbine éolienne pour créer un écoulement d'air passant à travers l'évaporateur ; **caractérisé en ce que**
le système comprend en outre un moteur/générateur (30) présentant un arbre où l'aube est montée de manière rotative ; et l'aube est associée à la turbine éolienne de telle sorte que l'aube puisse tourner de manière sélective indépendamment ou conjointement avec la turbine éolienne ; lorsque l'aube tourne indépendamment avec la turbine éolienne, le moteur/générateur fonctionne comme un moteur pour entraîner l'aube, et lorsque l'aube tourne conjointement avec la turbine éolienne, le moteur/générateur fonctionne comme un générateur pour générer de l'électricité.

2. Système de pompe à chaleur air-eau selon la revendication 1, dans lequel ledit axe de rotation s'étend dans une direction verticale.

3. Système de pompe à chaleur air-eau selon la revendication 1, dans lequel ladite turbine présente un carter (11) définissant un passage à l'intérieur de celui-ci, et ladite aube (20) est disposée à l'intérieur du carter.

4. Système de pompe à chaleur air-eau selon la revendication 1, dans lequel ledit moteur/générateur peut servir à fonctionner comme un moteur permettant d'entraîner l'aube lorsque la vitesse de rotation de la turbine éolienne est plus basse qu'un seuil inférieur, et à fonctionner comme un générateur permettant de générer de l'électricité lorsque la vitesse de rotation de la turbine éolienne dépasse ledit seuil inférieur.

5. Système de pompe à chaleur air-eau selon la revendication 4, dans lequel ladite pompe à chaleur comprend en outre un moteur c.c. permettant d'actionner le compresseur et une pompe c.c. (45) permettant de faire circuler un écoulement d'eau à travers le condensateur pour entrer en contact avec un écoulement de réfrigérant dans une relation d'échange de chaleur.

6. Système de pompe à chaleur air-eau selon la revendication 5, dans lequel lorsque la vitesse de rotation de la turbine éolienne dépasse ledit seuil inférieur, l'électricité générée est fournie au moteur c.c. et à la pompe c.c.

7. Système de pompe à chaleur air-eau selon la revendication 6, dans lequel lorsque la vitesse de rotation de la turbine éolienne dépasse un seuil supérieur qui est plus grand que le seuil inférieur, l'électricité générée est émise en outre vers des réseaux électriques.

8. Système de pompe à chaleur air-eau selon la revendication 5, comprenant en outre un bus c.c. (47) commun relié parmi le moteur/générateur, le moteur c.c., et la pompe c.c. pour fournir l'électricité générée par le moteur/générateur au moteur c.c. et à la pompe c.c.

9. Système de pompe à chaleur air-eau selon la revendication 4, comprenant en outre un couvercle (50) couvrant la pompe à chaleur et la turbine éolienne pour éviter que la pompe à chaleur et la turbine éolienne ne soient touchées, et en même temps pour permettre au vent de passer à travers lui.

10. Système de pompe à chaleur air-eau selon la revendication 7, dans lequel les seuils inférieur et supérieur sont constants ou peuvent être calculés conformément à des paramètres opérationnels du système de pompe à chaleur.
